# EUROPÄISCHE PATENTSCHRIFT

(11) **EP 1 306 154 B1**
(45) Veröffentlichungstag und Bekanntmachung des Hinweises auf die Patenterteilung: **21.06.2006**
(21) Anmeldenummer: 01124104.9
(22) Anmeldetag: 10.10.2001
(51) Int. Cl.: B23D 35/00, B23D 33/02

(54) **Verfahren zum Besäumen von Bändern, insbesondere warmgewalzten Metallbändern**
Method for trimming bands, more particularly hot-rolled metal bands
Procédé pour cisailler des bandes, en particulier des bandes métalliques laminées à chaud

(43) Veröffentlichungstag der Anmeldung: 02.05.2003
(73) Patentinhaber: BWG BERGWERK- UND WALZWERK-MASCHINENBAU GMBH, D-47051 Duisburg (DE)
(72) Erfinder: Noé, Andreas, Dr. mont., Dipl.-Ing., 47647 Kerken (DE); Noé, Rolf, Dipl.-Ing., 45478 Mülheim / Ruhr (DE); Baukloh, Dieter, Dipl.-Ing., 47053 Duisburg (DE)
(74) Vertreter: Albrecht, Rainer Harald

(56) Entgegenhaltungen:
- EP-A- 0 021 821
- EP-B- 0 556 462
- JP-A- 2000 225 512
- US-A- 2 859 813
- US-A- 2 911 044
- US-A- 5 562 008
- PATENT ABSTRACTS OF JAPAN vol. 007, no. 179 (M-234), 9. August 1983 (1983-08-09) -& JP 58 081515 A (NIPPON KOKAN KK), 16. Mai 1983 (1983-05-16)
- PATENT ABSTRACTS OF JAPAN vol. 011, no. 067 (M-566), 28. Februar 1987 (1987-02-28) -& JP 61 226214 A (NIPPON STEEL CORP), 8. Oktober 1986 (1986-10-08)
- PATENT ABSTRACTS OF JAPAN vol. 012, no. 475 (M-774), 13. Dezember 1988 (1988-12-13) -& JP 63 196312 A (KAWASAKI STEEL CORP), 15. August 1988 (1988-08-15)
- PATENT ABSTRACTS OF JAPAN vol. 2000, no. 03, 30. März 2000 (2000-03-30) -& JP 11 333619 A (KAWASAKI STEEL CORP), 7. Dezember 1999 (1999-12-07)
- PATENT ABSTRACTS OF JAPAN vol. 2000, no. 11, 3. Januar 2001 (2001-01-03) & JP 2000 225512 A (NIPPON STEEL CORP), 15. August 2000 (2000-08-15)

## Beschreibung

Die Erfindung betrifft ein Verfahren zum Besäumen von Bändern, insbesondere warmgewalzten Metallbändern in einer Besäumschere mit beidseitig des jeweiligen Bandes verfahrbaren Schneidköpfen.

Man kennt ein Verfahren zum Steuern einer Besäumschere im Zuge des Besäumens von Bändern, insbesondere warmgewalzten Metallbändern, wonach die Besäumschere beidseitig des jeweiligen Bandes verfahrbare Schneidköpfe sowie eine Bandmittensteuerung aufweist und in einem vorgegebenen Abstand vor der Besäumschere zumindest die Bandbreite, der Bandkantenverlauf und Kantensprünge an Bandverbindungsstellen sowie daraus resultierende Unregelmäßigkeiten in beiden Bandkantenbereichen kontinuierlich erfasst werden (vgl. EP 0 556 462 B1). Bei diesem bekannten Verfahren wird der von den erfassten Unregelmäßigkeiten bis zu der Besäumschere zurückgelegte oder noch zurückzulegende Weg ermittelt, ferner werden aus diesen Parametern die an beiden Bandkanten verbleibende Saumstreifenbreite und ihre jeweilige Position im Vergleich mit der an der Besäumschere eingestellten Fertigbandbreite errechnet.

Außerdem ist es bekannt, unmittelbar vor einer Besäumschere Sensoren zur Bandkantenerfassung anzuordnen, und zwar ist eine Mehrzahl von Sensoren auf beiden Seiten des in die Besäumschere einlaufenden Bandes angeordnet (vgl. EP 0 021 821 A1). In diesem Fall findet die Einstellung der verfahrbaren Schneidköpfe statt, während sich die Schneidmesser im Eingriff befinden. Da über dies eine Bandmittenregelung fehlt, ist das Unterschreiten einer Mindestsaumbreite und folglich das Auslaufen eines Saumstreifens nicht ausgeschlossen. Hinzu kommt, dass aus der Einstellung in Eingriff befindlicher Schneidmesser bei vorgegebener Bandgeschwindigkeit über eine vorgegebene Bandlänge Ausschuss in Kauf genommen werden muss, weil ein Besäumen des betreffenden Bandes im Zuge der Einstellung der Schneidmesser auf Fertigbandbreite nicht möglichist.

Ferner kennt man eine Anlage zum Besäumen von Bändern mit einer Besäumschere, wobei vor der Besäumschere Detektoren zur Erfassung der Bandkanten angeordnet sind. Mit Hilfe der erfassten Signale wird das Band über Seitenführungen justiert. Eingangsseitig und ausgangsseitig dieser Seitenführungen sind weitere Detektoren angeordnet (vgl. JP 61 226214 A).

Eine Besäumvorrichtung für Metallbänder ist ferner aus der JP 11 333619 A bekannt. Die Besäumvorrichtung weist rechts und links des Bandes angeordnete Schneidköpfe auf, welche mit Hilfe von Stellvorrichtungen verschiebbar angeordnet sind. Im Bereich des Bandes werden übermäßige Bandkrümmungen detektiert und daraufhin die Besäumköpfe verfahren.

Außerdem ist es bekannt, einen Bandkrümmungen erfassenden Sensor vorzusehen, über den Schneidköpfe bzw. ihre Schneidmesser gesteuert werden (vgl. JP 63 196312 A).

Schließlich ist es im Zusammenhang mit dem Besäumen von Metallplatten bekannt, dass Detektoren in Form von Fotozellen auf eine Steuerrolle arbeiten, um die Metallplatten gegenüber den Schneidmessern auszurichten (vgl. JP 2000 225512 A).

Der Erfindung liegt die Aufgabe zugrunde, ein Verfahren der eingangs beschriebenen Ausführungsform anzugeben, wonach die Bandkantenerfassung und das Besäumen von Bändern und insbesondere Metallbändern optimiert wird.

Zur Lösung dieses technischen Problems lehrt die Erfindung ein Verfahren zum Besäumen von Bändern, insbesondere warmgewalzten Metallbändern in einer Besäumschere mit beidseitig des jeweiligen Bandes verfahrbaren Schneidköpfen und mit einer der Besäumschere vorgelagerten Bandmittenregelungseinheit, wobei die Position der Bandkanten und ggf. die Bandbreite des in die Besäumschere einlaufenden Bandes unmittelbar vor den Schneidköpfen oder ihren Schneidmessern gleichsam in der Besäumschere gemessen wird, wobei die Bandmittenregelungseinheit vor, während oder nach dem Eingriff der Schneidmesser zum Abschneiden von Saumstreifen vorgegebener Breite mittels aus den Messergebnissen resultierender Messsignale das Band in Bezug auf die Bandmitte gegenüber den Schneidköpfen oder ihren Schneidmessern positioniert, wobei die Schneidköpfe selbst zur Feinregelung zusätzlich verfahren werden, wenn der Regelbereich oder die Regelgenauigkeit der Bandmittenregelung mit Hilfe der Bandmittenregelungseinheit nicht ausreichen und wobei die Messsignalesowohl zum Positionieren der Schneidköpfe als auch zum Positionieren der Bandmitte in Bezug auf die Schneidköpfe und Schneidmesser mittels der Bandmittenregelungseinheit verwendet werden. Erfindungsgemäß erfolgt die Bandkantenerfassung unmittelbar vor den Schneidköpfen oder ihren Schneidmessern und gleichsam in der Besäumschere selbst, so dass sonst störende Einflüsse wie beispielsweise Bandsäbel oder andere Unregelmäßigkeiten auf die Saumstreifenbreite vernachlässigbar sind und Störfälle vermieden werden. Wenn der Regelbereich oder die Regelgenauigkeit der Bandmittenregelung mit Hilfe der Bandmittenreglungseinheit nicht ausreichen, können die Schneidköpfe selbst zur Feinregelung zusätzlich verfahren werden. Stets werden die Bandkantenerfassung und das Besäumen von Bändern und insbesondere Metallbändern optimiert.

Weitere erfindungswesentliche Maßnahmen sind im Folgenden aufgeführt. So lehrt die Erfindung für Endlosbänder aus miteinander verbundenen Einzelbändern mit seitlichen Stanzausschnitten im Bereich der Bandverbindungsstellen, dass die Schneidmesser im Bereich der Stanzausschnitte außer Eingriff kommen und bei einem eventuellen Mittenversatz der beiden miteinander verbundenen Bänder im Zuge eines Bandstillstandes mittels der Schneidköpfe auf die neue Bandbreite so eingestellt werden, dass mit den beiden Schneidmessern Saumstreifen vorgegebener Breite, z. B.

Saumstreifen gleicher Breite abgeschnitten werden. Für endlich lange Bänder, bei denen der Bandanfang bis vor die Schneidmesser vorgefahren wird, sieht die Erfindung vor, dass bei einem eventuellen Mittenversatz die Schneidmesser mittels der Schneidköpfe im Zuge eines Bandstillstandes auf die neue Bandbreite so eingestellt werden, dass im Zuge des Besäumens von den beiden Schneidmessern Saumstreifen vorgegebener Breite, z. B. Saumstreifen gleicher Breite abgeschnitten werden. - Unter Berücksichtigung der Tatsache, dass die Messpositionen unmittelbar vor den Schneidmessern liegen, können die Schneidmesser bei Endlosbändern im Bereich der Stanzausschnitte automatisch so positioniert werden, dass beide Saumstreifen gleich breit sind. Bei endlich langen Bändern gelingt das ebenso, weil dann ein automatisches Positionieren der Schneidköpfe und folglich ihrer Schneidmesser im Bereich der vorgefahrenen Bandkante möglich ist. Dadurch kann der Besäumzuschlag, der das Zweifache der Saumstreifenbreite beträgt, verringert werden. Folglich wird eine Materialersparnis erreicht, sind darüber hinaus Störfälle nicht zu befürchten. Ferner sieht die Erfindung vor, dass nach dem Einstellen der Schneidköpfe und folglich ihrer Schneidmesser und Wiederanfahren des betreffenden Bandes oder Endlosbandes im Zuge des Besäumens ein eventueller Mittenversatz über eine vorgegebene Bandlänge bei gleichbleibender Saumstreifenbreite mittels der Bandmittenregelungseinheit und gegebenenfalls der Schneidköpfe auf null zurückgefahren wird bis das Band oder Endlosband wieder mittig durch die Bandlinie läuft. Dazu werden die Sollwerte für die Schneidköpfe und die Bandmittenregelung parallel auf Anlagenmitte zurückgefahren.

Insgesamt werden Störungen durch Auslaufen eines Saumstreifens bei säbeligen Bändern oder außermittig liegenden Bandanfängen bzw. zu Endlosbändern verbundenen Bändern vermieden. Durch die mögliche Verringerung des Besäumzuschlages wird die Ausbringung erhöht, während die automatische Fahrweise Bedienungspersonal einspart und Bedienungsfehler ausschließt.

Zur Durchführung des Verfahrens eignet sich eine Anlage zu Besäumen von Bändern bzw. Metallbändern, insbesondere warmgewalzten Metallbändern, in einer Besäumschere mit beidseitig des jeweiligen Bandes verfahrbaren Schneidköpfen und einer der Besäumschere vorgeordneten Bandmittenregelungseinheit sowie mit Messeinrichtungen zum Erfassen zumindest der Bandkanten, ggf. der Bandbreite und von Kantensprüngen. Diese Anlage sieht vor, dass die Messeinrichtungen unmittelbar vor den Schneidmessern und/oder den Schneidköpfen angeordnet sind, sich also praktisch in der Besäumschere befinden. Die Messeinrichtungen können als optische Sensoren (Fotozellen, Laser) oder elektrische Sensoren (induktiv, kapazitiv) ausgebildet sein. Auch der Einsatz von CCD-Kameras ist denkbar. Ferner sind die Messeinrichtungen vorzugsweise in Bandbreitenrichtung relativ zu den Schneidköpfen verfahrbar, um automatisch die Positionen der Bandkanten erfassen zu können. Die Schneidköpfe selbst sind unabhängig voneinander verfahrbar.

Im Folgenden wird die Erfindung anhand einer lediglich ein Ausführungsbeispiel darstellenden Zeichnung näher erläutert. Es zeigen:

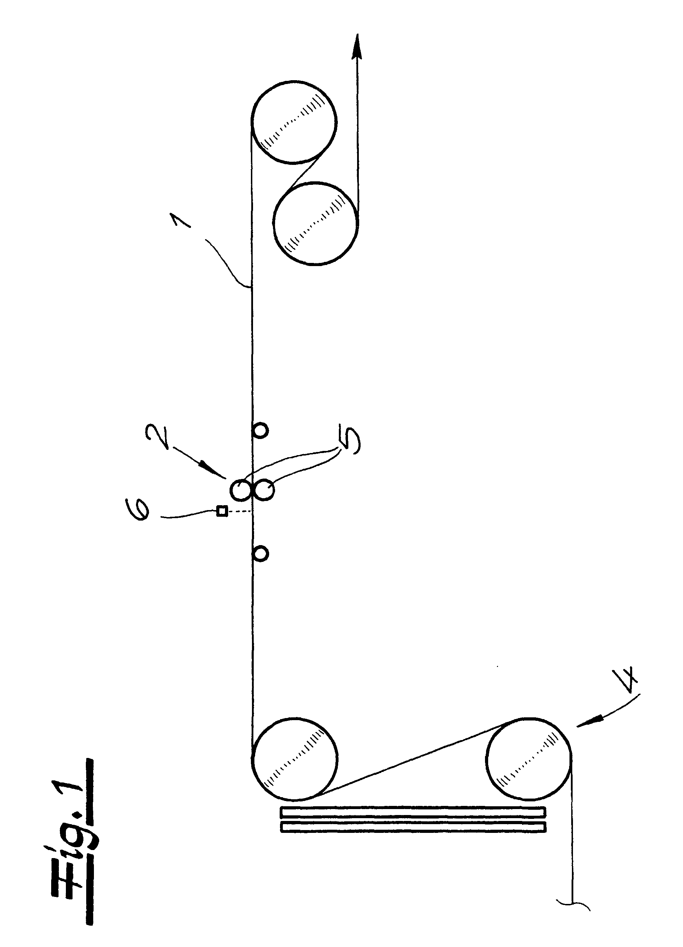

- Fig. 1: eine Besäumanlage in schematischer Seitenansicht,

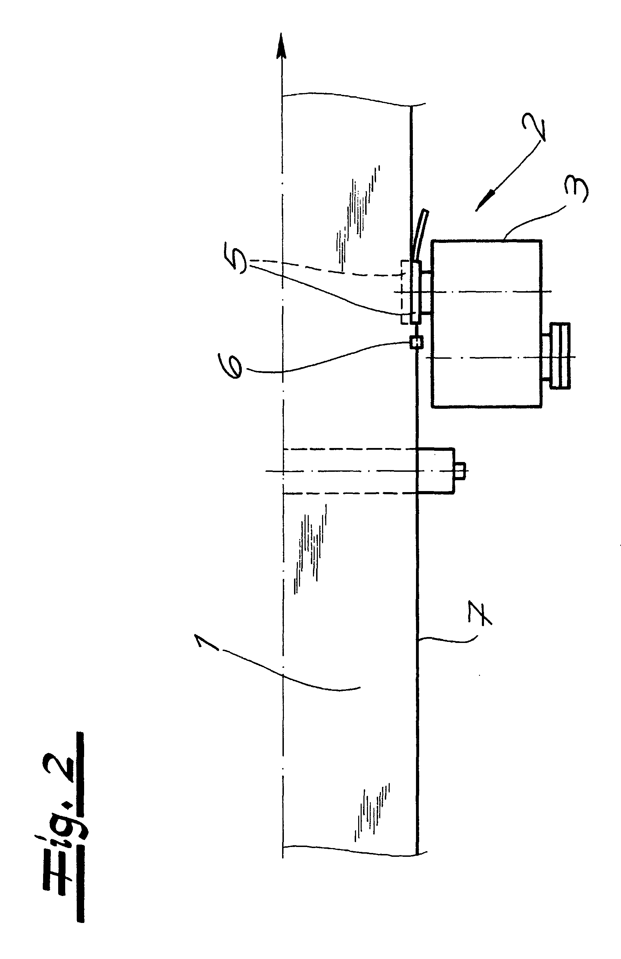

- Fig. 2: einen Ausschnitt aus dem Gegenstand nach Figur 1 in Draufsicht,

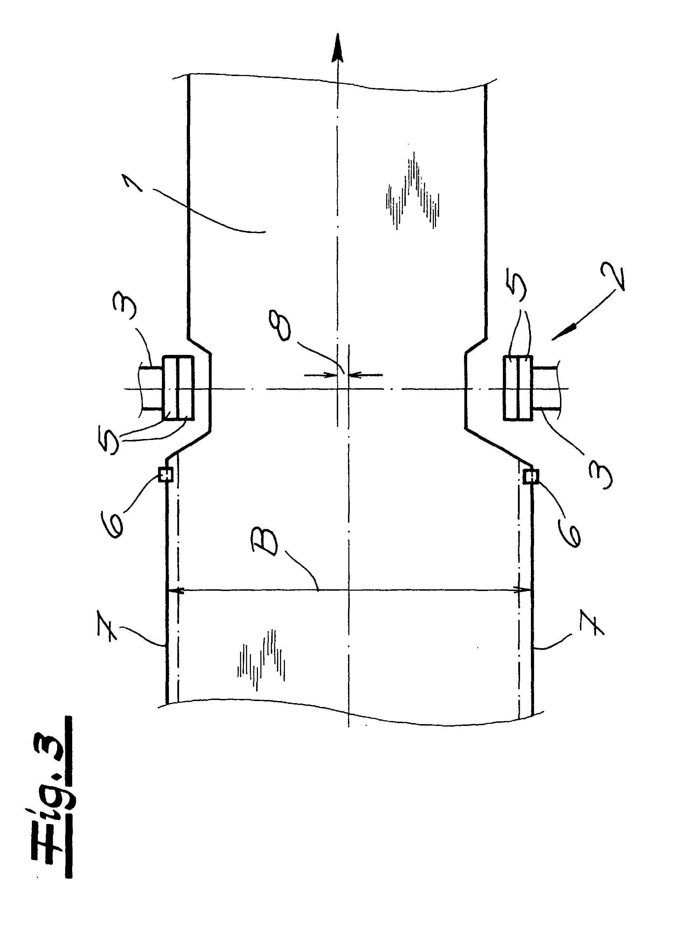

- Fig. 3: eine Bandverbindungsstelle mit außermittig angeschweißten Bandenden im Bereich von Schneidmessern und unmittelbar vorgeordneten Messeinrichtungen und

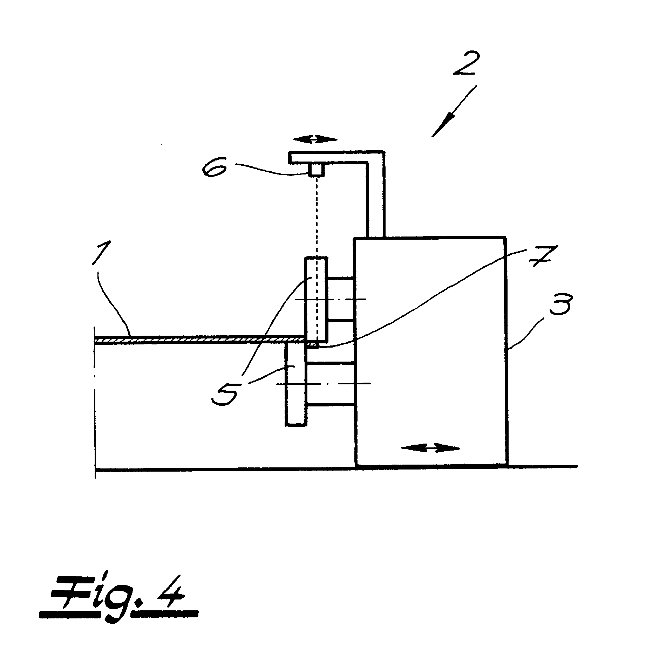

- Fig. 4: einen Vertikalschnitt durch eine Bandhälfte im Bereich eines Schneidkopfes mit in Bandbreitenrichtung verfahrbarer Messeinrichtung.

In den Figuren ist eine Anlage zum Besäumen von Metallbändern 1 und insbesondere warmgewalzten Metallbändern in einer Besäumschere 2 mit beidseitig des jeweiligen Bandes 1 verfahrbaren Schneidköpfen 3 und einer der Besäumschere vorgeordneten Bandmittenregelungseinheit 4 dargestellt. Die Schneidköpfe 3 sind mit Schneidmessern 5 und mit Messeinrichtungen 6 zum Erfassen zumindest der Bandkanten 7, der Bandbreite B und von Kantensprüngen 8 bestückt, wobei sich die Messeinrichtungen 6 - in Bandlaufrichtung gesehen - unmittelbar vor den Schneidköpfen 3 bzw. ihren Schneidmessern 5 befinden. Die Messeinrichtungen 6 sind nach dem Ausführungsbeispiel als Sensoren ausgebildet und in Bandbreitenrichtung relativ zu den Schneidköpfen 3 bzw. ihren Schneidmessern 5 verfahrbar. Die Schneidköpfe 3 sind unabhängig voneinander verfahrbar.

## Patentansprüche

1. Verfahren zum Besäumen von Bändern, insbesondere warmgewalzten Metallbändern, in einer Besäumschere mit beidseitig des jeweiligen Bandes verfahrbaren Schneidköpfen und mit einer der Besäumschere vorgelagerten Bandmittenregelungseinheit,
wobei die Position der Bandkanten und gegebenenfalls die Bandbreite des in die Besäumschere einlaufenden Bandes unmittelbar vor den Schneidköpfen oder ihren Schneidmessern gleichsam in der Besäumschere gemessen wird,
wobei die Bandmittenregelungseinheit vor, während oder nach dem Eingriff der Schneidmesser zum Abschneiden von Saumstreifen vorgegebener Breite mittels aus den Messergebnissen resultierender Messsignale das Band in Bezug auf die Bandmitte gegenüber den Schneidköpfen und Schneidmessem positioniert,
wobei die Schneidköpfe selbst zur Feinregelung zusätzlich verfahren werden, wenn der Regelbereich oder die Regelgenauigkeit der Bandmittenregelung mit Hilfe der Bandmittenregelungseinheit nicht ausreichen,
wobei die Messsignalesowohl zum Positionieren der Schneidköpfe als auch zum Positionieren der Bandmitte in Bezug auf die Schneidköpfe und Schneidmesser mittels der Bandmittenregelungseinheit verwendet werden.

2. Verfahren nach Anspruch 1 für Endlosbänder aus miteinander verbundenen Einzelbändem mit seitlichen Stanzausschnitten im Bereich der Bandverbindungsstellen, wobei die Schneidmesser im Bereich der Stanzausschnitte außer Eingriff kommen und mittels der Schneidköpfe bei einem eventuellen Mittenversatz der beiden miteinander verbundenen Bänder im Zuge eines Bandstillstandes auf die neue Bandbreite so eingestellt werden, dass mit den Schneidmessem Saumstreifen vorgegebener Breite, zum Beispiel Saumstreifen gleicher Breite abgeschnitten werden.

3. Verfahren nach Anspruch 1 für endlich lange Bänder, wobei der Bandanfang bis vor die Schneidmesser vorgefahren wird und bei einem eventuellen Mittenversatz die Schneidmesser mittels der Schneidköpfe im Zuge eines Bandstillstandes auf die neue Bandbreite so eingestellt werden, dass im Zuge des Besäumens von den Schneidmessern Saumstreifen vorgegebener Breite, zum Beispiel Saumstreifen gleicher Breite abgeschnitten werden.

4. Verfahren nach einem der Ansprüche 1 bis 3, **dadurch gekennzeichnet, dass** nach dem Einstellen der Schneidköpfe mit den Schneidmessem und Wiederanfahren des betreffenden Bandes oder Endlosbandes im Zuge des Besäumens ein eventueller Mittenversatz über eine vorgegebene Bandlänge bei gleich bleibender Saumstreifenbreite mittels der Bandmittenregelungseinheit und gegebenenfalls der Schneidköpfe auf null zurückgefahren wird bis das Band oder Endlosband wieder mittig durch die Bandlinie läuft.

## Claims

1. Method for trimming strips, in particular hot-rolled metal strips, in trimming shears with cutting heads which can be displaced on either side of the respective strip and with a strip centre adjustment unit mounted upstream of the trimming shears,
wherein the position of the strip edges and optionally the strip width of the strip running into the trimming shears is measured immediately in front of the cutting heads or their cutting blades in the trimming shears,
wherein, before, during or after engagement of the cutting blades for cutting trimmed edges of predefined width, the strip centre adjustment unit positions the strip in relation to the strip centre with respect to the cutting heads and cutting blades by means of measurement signals resulting from the measurement results,
wherein the cutting heads themselves are additionally displaced for fine adjustment when the adjustment range or adjustment accuracy of the strip centre adjustment by means of the strip centre adjustment unit is not sufficient,
wherein the measurement signals are used both to position the cutting heads and to position the strip centre in relation to the cutting heads and cutting blades by means of the strip centre adjustment unit.

2. Method according to Claim 1 for endless strips consisting of individual strips which are joined to one another and have lateral punched-out sections in the region of the strip connecting points, wherein the cutting blades come out of engagement in the region of the punched-out sections and, in the event of any centre offset of the two strips that are joined to one another, are adjusted to the new strip width by means of the cutting heads while the strip is at a standstill, in such a way that trimmed edges of predefined width, for example trimmed edges of equal width, are cut by the cutting blades.

3. Method according to Claim 1 for strips of finite length, wherein the start of the strip is advanced to in front of the cutting blades and, in the event of any centre offset, the cutting blades are adjusted to the new strip width by means of the cutting heads while the strip is at a standstill, in such a way that trimmed edges of predefined width, for example trimmed edges of equal width, are cut by the cutting blades during the trimming operation.

4. Method according to any of Claims 1 to 3, **characterized in that**, once the cutting heads with the cutting blades have been adjusted and the relevant strip or endless strip has been advanced again during the trimming operation, any centre offset over a predefined strip length is brought back to zero by means of the strip centre adjustment unit and optionally the cutting heads, while the trimmed edge width remains constant, until the strip or endless strip again runs centrally through the strip line.

## Revendications

1. Procédé pour rogner des bandes, en particulier des bandes de métal laminées à chaud dans une cisaille à rogner comportant des têtes de coupe déplaçables des deux côtés de la bande particulière et comportant une unité de régulation du centre de bande disposée en amont de la cisaille à rogner,
dans lequel la position des arêtes de bande et, le cas échéant, la largeur de bande de la bande entrant dans la cisaille à rogner est mesurée directement en amont des têtes de coupe ou de leurs lames de coupe quasiment dans la cisaille à rogner,
dans lequel, avant, pendant ou après l'engagement des lames de coupe pour découper des bords tombants de largeur donnée, l'unité de régulation du centre de bande positionne la bande par rapport aux têtes de coupe et aux lames de coupe, en référence au centre de bande, au moyen des signaux de mesure résultant des résultats de mesure,
dans lequel les têtes de coupe elles-mêmes sont déplacées en supplément, pour la régulation fine, lorsque la plage de régulation ou la précision de régulation de la régulation du centre de bande à l'aide de l'unité de régulation de centre de bande ne suffisent pas,
dans lequel les signaux de mesure sont utilisés aussi bien pour positionner les têtes de coupe que pour positionner le centre de bande par rapport aux têtes de coupe et aux lames de coupe au moyen de l'unité de régulation de centre de bande.

2. Procédé selon la revendication 1, pour bandes sans fin constituées de bandes individuelles reliées les unes aux autres, comportant des découpes estampées latérales dans la zone des points de liaison de bandes, dans lequel les lames de coupe se dégagent dans la zone des découpes estampées et sont réglées sur la nouvelle largeur de bande au moyen des têtes de coupe, dans le cas d'un éventuel décalage de centre des deux bandes reliées l'une à l'autre lors d'un arrêt de bande, de telle façon que des bords tombants de largeur donnée, par exemple des bords tombants de même largeur sont découpés avec les lames de coupe.

3. Procédé selon la revendication 1 pour bandes de longueur finie, dans lequel le début de bande est avancé jusque devant les lames de coupe et, dans le cas d'un éventuel décalage de centre, lors d'un arrêt de bande, les lames de coupe sont réglées au moyen des têtes de coupe sur la nouvelle largeur de bande de telle façon que lors du découpage, des bords tombants de largeur donnée, par exemple des bords tombants de même largeur, sont découpés par les lames de coupe.

4. Procédé selon l'une des revendications 1 à 3
**caractérisé en ce qu'**après le réglage des têtes de coupe avec les lames de coupe et le redémarrage de la bande ou bande sans fin concernée, un éventuel décalage de centre lors du rognage, est ramené à zéro sur une longueur de bande donnée, la largeur du bord tombant demeurant identique, au moyen de l'unité de régulation de bande et le cas échéant des têtes de coupe, jusqu'à ce que la bande ou bande sans fin se déplace de nouveau de manière centrée sur la ligne de bande.
